# EUROPEAN PATENT SPECIFICATION

(11) **EP 1 710 921 B1**
(45) Date of publication and mention of the grant of the patent: **22.07.2009**
(21) Application number: 06006563.8
(22) Date of filing: 29.03.2006
(51) Int. Cl.: H04B 1/10, H04B 1/52

(54) **Mobile terminal apparatus and broadcast receiving method**
Mobilgerät und Verfahren zum Empfangen von Rundfunksignalen
Terminal mobile et procédé pour la réception de signaux de radiodiffusion

(30) Priority: 06.04.2005 JP 2005110186
(43) Date of publication of application: 11.10.2006
(73) Proprietor: Sony Corporation, Tokyo (JP)
(72) Inventor: Kasashima, Yasuyuki, Tokyo (JP); Suda, Toru, Tokyo (JP); Masumura, Hitoshi, Tokyo (JP)
(74) Representative: Müller, Frithjof E.

(56) References cited:
- WO-A-20/04109940
- US-A- 4 063 175
- US-A- 6 078 797
- US-A1- 2003 102 912
- US-B1- 6 253 070
- US-B1- 6 718 157

## Description

### CROSS REFERENCES TO RELATED APPLICATIONS

The present invention contains subject matter related to Japanese Patent Application JP 2005-110186 filed with the Japanese Patent Office on April 6, 2005, which corresponds to European Patent Publication EP 1 710 921 A1.

### BACKGROUND OF THE INVENTION

The present invention relates to a mobile terminal apparatus and a broadcast receiving method. More particularly, the invention relates to a mobile terminal apparatus and a broadcast receiving method whereby a selection is made between a signal path on which to amplify a receiver signal derived from a received broadcast signal on the one hand, and a signal path on which no such amplification is performed on the other hand, depending on the communication status of an ongoing wireless communication, so that the signal on a desired channel is selected from the receiver signal supplied over the selected signal path in carrying out frequency conversion.

With their functionality improving continually, some of today's mobile terminal apparatuses are capable of not only offering mobile phone capabilities but also allowing users to watch TV programs at the same time, as disclosed illustratively in Japanese Patent Laid-open No. 2003-309774. TV broadcast signals are currently transmitted over frequencies ranging from 90 MHz to 770 MHz. Meanwhile, mobile phones have been designed to conduct wireless communications illustratively over the 800 MHz band. With terrestrial analog broadcast coming to an end, a plan is under way to appropriate the TV broadcast frequencies as communication frequencies. That plan, if implemented, could bring about the following situation: when utilizing mobile phone capabilities for wireless communication while watching a TV broadcast program at the same time, a mobile phone user may be employing two proximate frequencies.

US-B1-6 718 157 discloses an apparatus for commonly using an antenna for a call signal and a television broadcasting signal in a radio communication terminal. The received signal is fed to a phone duplexer and via a stub to a TV tuner. The terminal of the stub connected to the TV tuner is connected to a switching device which is controlled by a control signal generated in a control device depending on the communication status of the radio communication terminal. In a call communication mode the switching device is switched on and the transmitted audio signal cannot be transferred to the TV tuner because high impedance is produced from a phone duplexer to the TV tuner. In this mode only VHF TV broadcast signals can be received and only if the terminal is in a location where there is a strong TV broadcast signal. In a reception stand by mode the switching device is turned off and the terminal of the stub connected to the TV tuner is in a low impedance state. The received signal is transferred to the ground terminal. The open stub acts on the ground terminal with a low impedance but with respect to the phone duplexer the impedance has a certain value somewhat degrading the receiving sensitivity of the terminal. In the TV mode the switching device is also turned off. A LC series resonance is generated in a specified TV frequency band and the TV broadcasting signal proceeds through the stub to the TV tuner so that the reception of the TV broadcast signal is possible.

### SUMMARY OF THE INVENTION

In a wireless communication, a transmitter signal sent from a mobile terminal apparatus generally has a higher signal level than broadcast signals received thereby. It follows that using-mobile phone both to perform wireless communications and to view a TV broadcast program simultaneously on two proximate frequencies could result in the transmitter signal interfering with the ongoing TV broadcast images. TV program images could also be disturbed when a wireless receiver signal in a wireless communication has an appreciably higher signal level than broadcast signals.

The present invention has been made in view of the above circumstances and provides a mobile terminal apparatus and a broadcast receiving method whereby interference due to wireless communications is minimized upon broadcast reception.

In carrying out the present invention and according to one embodiment thereof, there is provided a mobile terminal apparatus including: a tuner device configured to perform frequency conversion upon selecting a signal on a desired channel from a receiver signal derived from a received broadcast signal; a communication device configured to conduct wireless communications; and a control device configured to control the tuner device and the communication device in operation; wherein the tuner device has an input stage including a signal path on which the receiver signal is amplified before being forwarded downstream, and a signal path on which the receiver signal is not amplified when forwarded downstream; and wherein the control device selects one of the signal paths in the input stage depending on communication status of the communication device.

According to another embodiment of the present invention, there is provided a broadcast receiving method including the steps of: determining communication status of wireless communications; depending on the communication status thus determined, selecting either a signal path on which a receiver signal derived from a received broadcast signal is amplified or a signal path on which the receiver signal is not amplified; and performing frequency conversion upon selecting a signal on a desired channel from the receiver signal supplied over the selected signal path.

Where the present invention is practiced as outlined above, a suitable signal path is arranged to be selected depending on the operation status of wireless communication. It might happen that a receiver signal derived from a received broadcast signal is found likely to develop distortion upon amplification when signal components of a wireless transmitter signal intervene. It might also happen that a received wireless signal has a higher signal level than a predetermined threshold. In such cases, the signal path is selected on which the receiver signal obtained from the received broadcast signal is not amplified. The signal on a desired channel will then be selected from the receiver signal supplied over the selected signal path before frequency conversion is carried out. If there is found no possibility of having distortion upon amplification, the signal path is selected on which the receiver signal acquired from the received broadcast signal is amplified. The signal on the desired channel will then be selected from the receiver signal supplied over the selected signal path before frequency conversion is effected.

According to the present invention, a selection is thus made between the signal path on which to amplify a receiver signal derived from a received broadcast signal on the one hand, and the signal path on which no such amplification is performed on the other hand, depending on the communication status of an ongoing wireless communication. The signal on the desired channel is then selected from the receiver signal supplied over the selected signal path before frequency conversion is performed. If a receiver signal derived from a received broadcast signal is found likely to develop distortion upon amplification when signal components of a wireless transmitter signal intervene, then the signal path on which signal amplification is not performed is selected. This arrangement prevents distortion of the receiver signal, whereby interference attributable to wireless communication during the broadcast reception is minimized.

### BRIEF DESCRIPTION OF THE DRAWINGS

Fig. 1 is a block diagram showing a typical structure of a mobile terminal apparatus practiced as one embodiment of the present invention;
Fig. 2 is a schematic view showing a typical input stage of a tuner device as part of the embodiment; and
Fig. 3 is a flowchart of steps in which a signal path is selected.

### DETAILED DESCRIPTION OF THE PREFERRED EMBODIMENTS

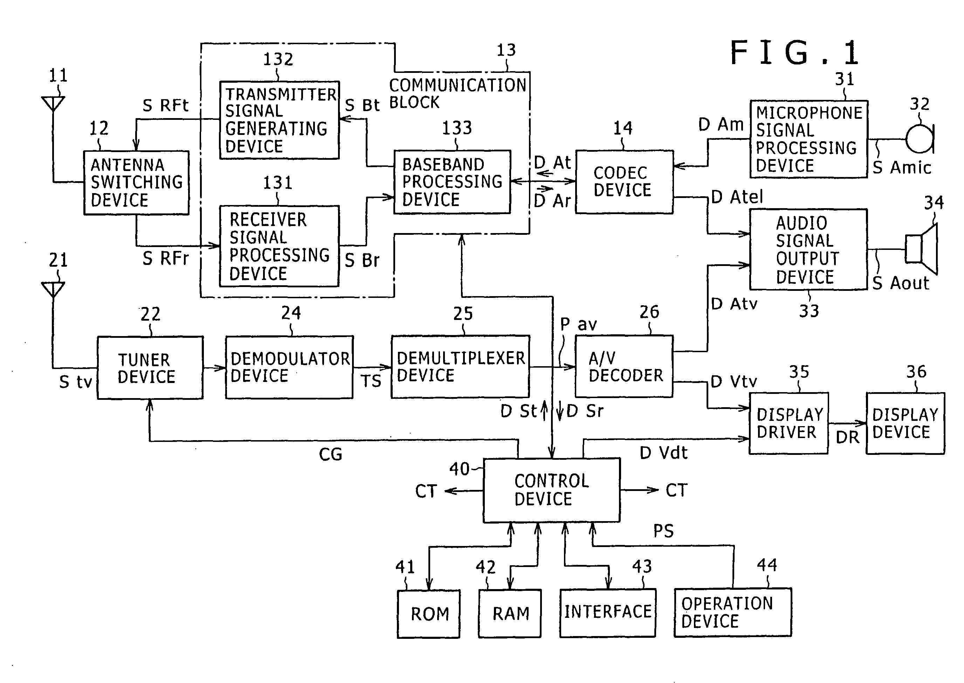

One preferred embodiment of the present invention will now be described with reference to the accompanying drawings. Fig. 1 is a block diagram showing a typical structure of a mobile terminal apparatus practiced as one embodiment of the present invention. Referring to Fig. 1, a communication antenna 11 is used to conduct wireless communications and is connected to an antenna switching device 12. A broadcast receiving antenna'21 is designed to receive TV broadcast signals and is connected to a tuner device 22.

The antenna switching device 12 is constituted illustratively by a duplexer or the like. A receiver signal SRFr derived from a wireless signal received by the communication antenna 11 is forwarded by the antenna switching device 12 to a receiver signal processing device 131 in a communication block 13. A transmitter signal SRFt fed from a transmitter signal generating device 132 in the communication block 13 is forwarded by the antenna switching device 12 to the communication antenna 11.

The receiver signal processing device 131 subjects the receiver signal SRFr to frequency conversion and demodulation so as to generate a baseband receiver signal SBr which is then fed to a baseband processing device 133. The transmitter signal generating device 132 subjects a baseband transmitter signal SBt supplied from the baseband processing device 133 to modulation and frequency conversion in order to generate a transmitter signal SRFt which is then forwarded to the antenna switching device 12.

The baseband processing device 133 converts the baseband receiver signal SBr into digital baseband receiver data, before carrying out a de-interleaving process, a decoding process and an error correcting process. Receiver audio data DAr and receiver information data DSr are thus acquired from the processing and are supplied to a codec device 14 and a control device 40, respectively. The baseband processing device 133 adds an error correcting code to the transmitter audio data DAt from the codec device 14 and to the transmitter information data DSt from the control device 40, before performing an encoding process and an interleaving process to generate baseband transmitter data. The baseband processing device 133 further converts the baseband transmitter data thus generated into an analog baseband transmitter signal SBt which is then fed to the transmitter signal generating device 132.

The codec device 14 decompresses the receiver audio data DAr into audio data DAtel which is supplied to an audio signal output device 33. When digital audio data DAm is supplied from a microphone signal processing device 31, to be discussed later, the codec device 14 compresses the audio data DAm into transmitter audio data DAt which is forwarded to the baseband processing device 133.

The tuner device 22 connected to the broadcast receiving antenna 21 amplifies a receiver signal Stv derived from a TV broadcast signal received by the antenna 21. Thereafter, the tuner device 22 carries out a frequency converting process and a station selecting process and forwards the receiver signal on a desired channel to a demodulator device 24. The demodulator device 24 demodulates the receiver signal coming from the tuner device 22 and supplies a transport stream TS resulting from demodulation to a demultiplexer device 25. The demodulator device 24 further subjects the signal derived from demodulation to an error correcting process.

The demultiplexer device 25 selects relevant audio/video packets Pav from the transport stream TS and supplies the selected packets to an A/V decoder 26. In turn, the A/V decoder 26 decodes the audio/video packets Pav. Video data DVtv and audio data DAtv obtained through decoding are sent to a display driver 35 and to the audio signal output device 33, respectively.

The microphone signal processing device 31 amplifies a microphone audio SAmic coming from a connected microphone 32 and then converts it into digital audio data DAm. The microphone signal processing device 31 supplies the digital audio data DAm to the codec device 14.

The audio signal output device 33 selects either the audio data DAtel fed from the codec device 14 or the audio data DAtv coming from the A/V decoder 26, and converts the selected data into an analog audio signal. The audio signal output device 33 adjusts the converted audio signal in signal level or the like and forwards the adjusted signal to speakers 34 as an audio output signal SAout.

The display driver 35 generates a display drive signal DR based on either the video data DVtv supplied from the A/V decoder 26 or display data DVdt coming from the control device 40, and sends the generated display drive signal DR to a display device 36. The display device 36 is typically made up of an LCD (liquid crystal display) or like equipment. Driven by the display drive signal DR fed from the display driver 35, the display device 36 displays images of broadcast programs, information obtained through communications, or indications about operation status of the mobile terminal apparatus.

The control device 40 is connected with a ROM (read only memory) 41, a RAM (random access memory) 42, an interface 43, and an operation device 44 composed of a keypad or the like. The ROM 41 retains control signals and other software resources for use by the control device 40 in controlling the workings of diverse components reflecting the user's operation on the mobile terminal apparatus 10. The RAM 42 stores information to be transmitted, information that has been received, and information about the parties to communicate with. The interface 43 allows the mobile terminal apparatus 10 to connect with a computer and peripherals. The operation device 44 is typically formed by a keypad including alphanumeric keys. When any one of its keys is operated, the operation device 44 supplies the control device 40 with an operation signal PS reflecting the key operation.

The control device 40 executes the control programs held in the ROM 41, generates a control signal CT based on the operation signal PS coming from the operation device 44, and feeds the generated control signal CT to the communication block 13 and tuner device 22 so that the mobile terminal apparatus 10 will function as desired. For example, the control device 40 may supply the control signal CT to the tuner device 22 to select a TV program broadcast over a desired channel, and causes the display device 36 to display images of the selected program. The control device 40 may also supply the control signal CT to the communication block 13 to establish voice or data communication with a desired party. As another example, the control device 40 may use the control signal CT to control the signal level of the audio output signal SAout from the audio signal output device 33, whereby the sound output by the speakers 34 is adjusted in volume. In order to minimize the adverse effects of wireless communication on the currently viewed broadcast program, the control device 40 generates a signal path selection signal CG in keeping with wireless communication status, and supplies the generated signal to the tuner device 22. The input stage of the tuner 22 is furnished with two signal paths: a signal path on which the receiver signal Stv is amplified before being forwarded downstream, and a signal path on which the receiver signal Stv is not amplified when forwarded downstream. One of the two signal paths is selected on the basis of the signal path selection signal CG.

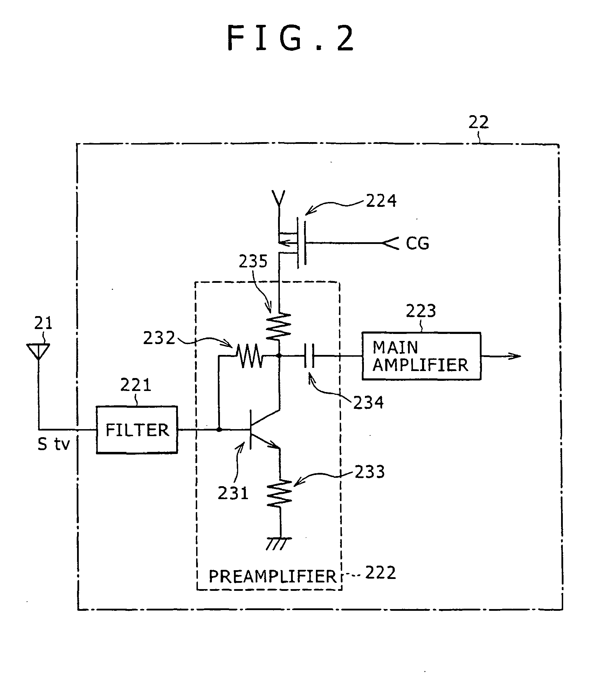

Fig. 2 is a schematic view showing a typical input stage of the tuner device 22. The broadcast receiving antenna 21 is connected to a filter 221 of the tuner device 22. The filter 221 performs a filtering process to let signals pass through if they are on the frequencies used by TV broadcasts.

The filtered signal past the filter 221 is fed to the base of an NPN transistor 231. Although Fig. 2 shows a preamplifier 222 including the transistor 231, this is only an example and not limitative of the embodiment of the present invention shown in Fig. 2.

A resistor 232 working as a feedback circuit of the amplifier is connected interposingly between the base and collector of the transistor 231. The emitter of the transistor 231 is grounded through a resistor 233. The collector of the transistor 231 is connected to a downstream main amplifier 223 through a resistor 234. The collector is also connected via a resistor 235 to the drain of a P-channel MOS switching transistor 224. The source of the switching transistor 224 is connected to a power supply voltage V and its gate is fed with the signal path selection signal CG.

When the switching transistor 224 is turned on by the signal path selection signal CG in the above setup, the power supply voltage V is fed to the preamplifier 222. This causes the filtered signal to be amplified by the preamplifier 222 before being forwarded to the main amplifier 223 located downstream. When the switching transistor 224 is turned off, the preamplifier 222 is cut off from the power supply voltage V. This causes the filtered signal to be fed to the downstream main amplifier 223 through the resistor 232 (working as a feedback resistor) without being amplified by the preamplifier 222.

It might happen that the frequency band used for wireless communication is so close to the frequencies utilized for TV broadcasts that the signal components employed for wireless communication cannot be attenuated to a sufficiently low level by the filter 221. In such a case, the receiver signal Stv tends to be supplemented with signal components of wireless communication and raised in signal level accordingly. If the receiver signal Stv with its signal level boosted is amplified by the preamplifier 223, nonlinear characteristics of transistors interfere with the signal being fed to the main amplifier 223. This leads illustratively to distorted images of the TV program being viewed.

Where the receiver signal Stv is supplemented with signal components of wireless communication and likely to develop distortion upon amplification, the control device 40 selects the signal path on which the receiver signal Stv is fed to the main amplifier 223 without preliminary amplification. If there is no possibility that the receiver signal Stv can produce distortion when amplified, then the control device 40 selects the signal path on which the receiver signal Stv is amplified before being forwarded to the main amplifier 223. The selection is made by use of the signal path selection signal CG generated by the control device 40.

Illustratively, when a wireless signal is to be transmitted from the communication antenna 11 during reception of a broadcast signal, the signal level of the transmitter signal is generally high and its component is likely to be added to the receiver signal Stv. In that case, the control device 40 drives the signal path selection signal CG High at the beginning of the wireless signal transmission and brings the signal CG Low at the end of the transmission. With the signal path selection signal CG generated in this manner, the receiver signal Stv is supplied to the main amplifier 223 through the resistor 232 working as a feedback resistance. This prevents a distortion-prone receiver signal from getting fed to the main amplifier 223, so that interference stemming from wireless communication is minimized. At the end of the wireless signal transmission, the preamplifier 222 supplied with the power supply voltage V amplifies the receiver signal Stv before forwarding it to the main amplifier 223. This arrangement makes it possible to present TV broadcast programs adequately even when the signal level of the receiver signal Stv is low.

If the signal level of the receiver signal SRFr derived from the wireless signal received by the communication antenna 11 is appreciably high, signal components of the wireless signal also tend to be added to the receiver signal Stv. In that case, the receiver signal processing device 131 detects the signal level of the receiver signal SRFr and notifies the control device 40 of a receiver signal level (not shown) indicative of what has been detected from the receiver signal SRFr. If the signal level of the receiver signal SRFr is found higher than a predetermined signal level, the control device 40 drives the signal path selection signal CG High so that the receiver signal Stv will be fed to the main amplifier 223 without being amplified upstream.

With the inventive arrangements above in place, if the mobile terminal apparatus 10 is used near a base station with the possibility of letting signal components of the wireless signal from that station boost the signal level of the receiver signal Stv, a distorted wireless signal will not be supplied to the main amplifier 223. This minimizes interference attributable to wireless communication.

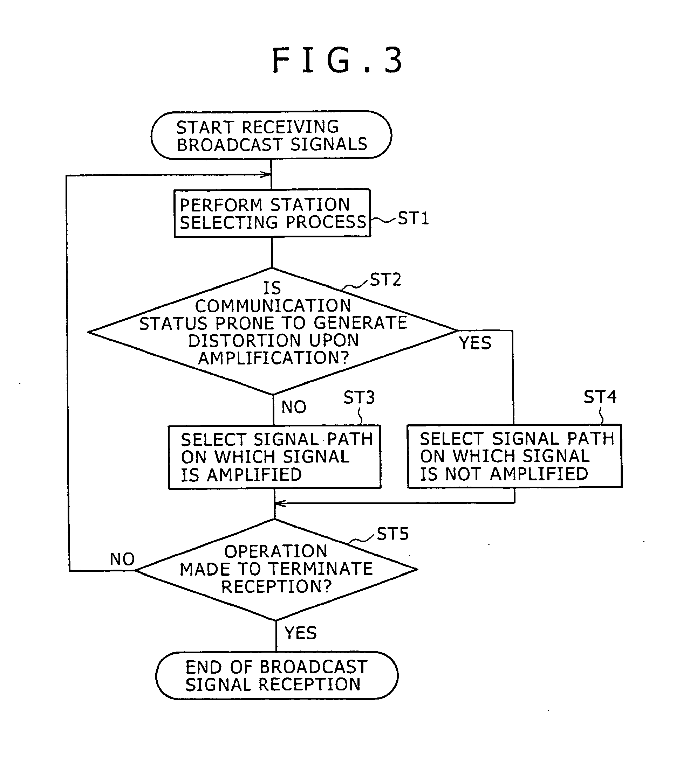

Fig. 3 is a flowchart of steps performed by the control device 40 in selecting a signal path. When a broadcast signal reception starting operation is carried out, the control device 40 goes to step ST1. In step ST1, the control device 40 causes the tuner device 22 to select a broadcast station. More specifically, the control device 40 causes the tuner device 22 to select the channel designated by the reception starting operation or the channel selected at the most recent viewing of a broadcast program (i.e., last channel), before carrying out frequency conversion. Step ST1 is followed by step ST2.

In step ST2, the control device 40 checks to determine whether the current status of communication is prone to generate distortion in the receiver signal Stv upon amplification. If the current communication status is found unlikely to produce distortion upon amplification in the receiver signal Stv, the control device 40 goes to step ST3. If the communication status is found likely to result in distorting the receiver signal Stv upon amplification, the control device 40 reaches step ST4. Illustratively, if no wireless signal is being transmitted by the mobile terminal apparatus 10 or if the signal level of the receiver signal SRFr obtained from the wireless signal received by the communication antenna 11 is not higher than a predetermined signal level, it is determined that the receiver signal Stv will not develop distortion upon amplification. In that case, step ST3 is reached. If a wireless signal is being transmitted or if the signal level of the receiver signal SRFr is found higher than the predetermined signal level, step ST4 is reached because the receiver signal Stv can develop distortion upon amplification.

In step ST3, the control device 40 selects the signal path on which the signal is amplified, before reaching step ST5. More specifically, where the input stage of the tuner device 22 is structured as illustrated in Fig. 2, the signal path selection signal CG is brought Low to turn on the switching transistor 224. This causes the preamplifier 222 to be fed with the power supply voltage. The preamplifier 222 then amplifies the receiver signal Stv derived from the broadcast signal received by the broadcast receiving antenna 21, and forwards the amplified signal to the main amplifier 223 via a coupling capacitor 234.

In step ST4, the control device 40 selects the signal path on which the signal is not amplified, before reaching step ST5. More specifically, where the input stage of the tuner device 22 is structured as shown in Fig. 2, the signal path selection signal CG is driven High to turn off the switching transistor 224. This disconnects the preamplifier 222 from the power supply voltage. The receiver signal Stv obtained from the broadcast signal received by the broadcast receiving antenna 21 is forwarded to the main amplifier 223 through the resistor 232 and coupling capacitor 234.

In step ST5, the control device 40 checks to determine whether a reception terminating operation is carried out. If the operation signal PS indicative of the reception terminating operation is not found received from the operation device 44, the control device 40 returns to step ST1 and performs frequency conversion upon selecting the signal on the desired channel from the receiver signal Stv supplied over the selected signal path. If the operation signal PS representative of the reception terminating operation is found received from the operation device 44, the control device 40 terminates reception of the broadcast signal.

As described, when the tuner device does not perform communication activities that can interfere with the viewing of a broadcast program, the control device selects the signal path on which the receiver signal is amplified before being fed to downstream processing circuits. When the tuner device is conducting communications that can interference with the broadcast program viewing, the control device selects the signal path on which the receiver signal is not amplified when forwarded to the downstream circuits.

In this manner, even if signal components of wireless communication add to the signal level of the receiver signal Stv, the downstream processing circuits will not be supplied with a distorted signal. This makes it possible to reduce the possibility of interference resulting from wireless communication during broadcast program reception.

The feedback circuit of the preamplifier 222 is utilized as the signal path on which the receiver signal Stv is not amplified when forwarded downstream. Because there is no need to install new signal paths apart from the preamplifier 222 or a path switching circuit for selecting a signal path, the structure of the apparatus is simplified appreciably.

As described above, the mobile terminal apparatus and broadcast receiving method according to the present invention are adapted advantageously to setups for conducting wireless communications while receiving broadcast signals. In particular, the present invention applies to mobile phones capable of letting users watch TV broadcasts on a phone screen.

It should be understood by those skilled in the art that various modifications, combinations, subcombinations and alterations may occur depending on design requirements and other factor in so far as they are within the scope of the appended claims or the equivalents thereof.

## Claims

1. A mobile terminal apparatus comprising:
a tuner device (22) configured to perform frequency conversion upon selecting a signal on a desired channel from a receiver signal (Stv) derived from a received broadcast signal;
a communication device (13) configured to conduct wireless communications;
a control device (40) configured to control said tuner device (22) and said communication device (13) in operation; and
a switching device (224) being controlled by a control signal (CG) depending on the communication status of said communication device,
**characterized in that**
said tuner device (22) comprises an input stage (222) being controlled by said switching device (224); that
said input stage (222) includes a first signal path on which said receiver signal (Stv) is amplified before being forwarded downstream, and a second signal path on which said receiver signal (Stv) is not amplified when forwarded downstream; and that
said switching device (224) is adapted to select the first signal path or the second signal path in said input stage (222) depending on communication status of said communication device.

2. The mobile terminal apparatus according to claim 1, wherein
said second signal path on which said receiver signal (Stv) is not amplified when forwarded downstream is constituted by a feedback circuit (232) of an amplifier device (231) attached to the first signal path on which said receiver signal (Stv) is amplified before being forwarded downstream.

3. The mobile terminal apparatus according to claim 1, wherein
said communication status comprises a first communication status in which said communication device (13) is transmitting a wireless signal or in which a wireless signal received by said communication device (13) has a signal level higher than a predetermined threshold; and wherein
said control device (40) is adapted to select in said first communication status said second signal path on which said receiver signal (Stv) is not amplified when forwarded downstream.

4. The mobile terminal apparatus according to claim 1, wherein
said communication status comprises a second communication status in which said communication device (13) is not transmitting a wireless signal or in which a wireless signal received by said communication device (13) has a signal level not higher than a predetermined threshold; and wherein
said control device (40) is adapted to select in said second communication status the first signal path on which said receiver signal (Stv) is amplified when forwarded downstream.

5. A broadcast receiving method comprising the steps of:
frequency conversion in a tuner device (22) upon selecting a signal on a desired channel from a receiver signal (Stv) derived from a received broadcast signal;
conducting wireless communications in a communication device (13);
controlling said tuner device (22) and said communication device (13) in operation by a control device (40); and
controlling a switching device (224) by a control signal (CG) generated in said control device (40) depending on a determined communication status of said communication device (13),
**characterized by** the steps of:
selecting in an input stage (222) in said tuner device (22) by said switching device (224), depending on said determined communication status, either a first or a second signal path, whereby on said first signal path said receiver signal (Stv) is amplified (ST3) before being forwarded downstream and whereby on said second signal path said receiver signal (Stv) is not amplified (ST4) when forwarded downstream; and
performing said frequency conversion from said receiver signal (Stv) supplied over said selected first or second signal path.

## Patentansprüche

1. Mobiles Endgerät mit:
einer Tunereinrichtung (22), welche ausgebildet ist, eine Frequenzwandlung durchzuführen, und zwar auf ein Auswählen eines Signals auf einem gewünschten Kanal von einem Empfängersignal (Stv) hin, welches von einem empfangenen Rundfunksignal abgeleitet wurde;
einer Kommunikationseinrichtung (13), welche ausgebildet ist, drahtlose Kommunikation durchzuführen;
einer Steuereinrichtung (40), welche ausgebildet ist, die Tunereinrichtung (22) und die Kommunikationseinrichtung (13) im Betrieb zu steuern; und
einer Schalteinrichtung (224), welche durch ein Steuersignal (CG) in Abhängigkeit des Kommunikationsstatus der Kommunikationseinrichtung gesteuert wird,
**dadurch gekennzeichnet,**
**dass** die Tunereinrichtung (22) eine Eingangsstufe (222) aufweist, welche durch die Schalteinrichtung (224) gesteuert wird;
**dass** die Eingangsstufe (222) einen ersten Signalpfad, auf welchem das Empfängersignal (Stv) verstärkt wird, bevor es stromabwärts weitergeleitet wird, und einen zweiten Signalpfad aufweist, auf welchem das Empfängersignal (Stv) nicht verstärkt wird, wenn es stromabwärts weitergeleitet wird; und
**dass** die Schalteinrichtung (224) dazu ausgebildet ist, den ersten Signalpfad oder den zweiten Signalpfad in der Eingangsstufe (222) auszuwählen, und zwar abhängig vom Kommunikationsstatus der Kommunikationseinrichtung.

2. Mobiles Endgerät nach Anspruch 1,
wobei der zweite Signalpfad, auf welchem das Empfängersignal (Stv) nicht verstärkt wird, wenn es stromabwärts weitergeleitet wird, gebildet wird durch einen Rückkopplungsschaltkreis (232) einer Verstärkereinrichtung (231), welche dem ersten Signalpfad hinzugefügt ist, auf welchem das Empfängersignal (Stv) verstärkt wird, bevor es stromabwärts weitergeleitet wird.

3. Mobiles Endgerät nach Anspruch 1,
wobei der Kommunikationsstatus einen ersten Kommunikationsstatus aufweist, in welchem die Kommunikationseinrichtung (13) ein Drahtlossignal übermittelt oder in welchem ein von der Kommunikationseinrichtung (13) empfangenes Drahtlossignal einen Signalpegel aufweist, welcher höher ist als ein vorbestimmter Schwellwert; und
wobei die Steuereinrichtung (40) dazu ausgebildet ist, im ersten Kommunikationsstatus den zweiten Signalpfad auszuwählen, auf welchem das Empfängersignal (Stv) nicht verstärkt wird, wenn es stromabwärts weitergeleitet wird.

4. Mobiles Endgerät nach Anspruch 1,
wobei der Kommunikationsstatus einen zweiten Kommunikationsstatus aufweist, in welchem die Kommunikationseinrichtung (13) kein Drahtlossignal überträgt oder in welchem ein von der Kommunikationseinrichtung (13) empfangenes Drahtlossignal einen Signalpegel aufweist, der nicht höher ist als ein vorbestimmter Schwellwert; und
wobei die Steuereinrichtung (40) dazu ausgebildet ist, im zweiten Kommunikationsstatus den ersten Signalpfad auszuwählen, auf welchem das Empfängersignal (Stv) verstärkt wird, wenn es stromabwärts weitergeleitet wird.

5. Rundfunkempfangsverfahren, mit den Schritten:
Frequenzwandlung in einer Tunereinrichtung (22) auf ein Auswählen eines Signals auf einem gewünschten Kanal von einem Empfängersignal (Stv) hin, welches von einem empfangenen Rundfunksignal abgeleitet wurde;
Durchführen drahtloser Kommunikation in einer Kommunikationseinrichtung (13);
Steuern der Tunereinrichtung (22) und der Kommunikationseinrichtung (13) im Betrieb mittels einer Steuereinrichtung (40); und
Steuern einer Schalteinrichtung (224) durch ein Steuersignal (CG), welches in der Steuereinrichtung (40) erzeugt wird, und zwar in Abhängigkeit von einem ermittelten Kommunikationsstatus der Kommunikationseinrichtung (13),
**gekennzeichnet durch** die Schritte:
Auswählen entweder eines ersten oder eines zweiten Signalpfads in einer Eingangsstufe (222) in der Tunereinrichtung (22) **durch** die Schalteinrichtung (224), und zwar in Abhängigkeit des ermittelten Kommunikationsstatus, wodurch auf dem ersten Signalpfad das Empfängersignal (Stv) verstärkt (ST3) wird, bevor es stromabwärts weitergeleitet wird, und wodurch auf dem zweiten Signalpfad das Empfängersignal (Stv) nicht verstärkt (ST4) wird, wenn es stromabwärts weitergeleitet wird; und
Durchführen der Frequenzwandlung von dem Empfängersignal (Stv), welches über den ausgewählten ersten oder zweiten Signalpfad zugeführt wurde.

## Revendications

1. Appareil terminal mobile comprenant :
un dispositif syntoniseur (22) configuré pour effectuer une conversion de fréquence lors de la sélection d'un signal sur un canal souhaité à partir d'un signal récepteur (Stv) dérivé d'un signal de radiodiffusion reçu ;
un dispositif de communication (13) configuré pour conduire des communications sans fil ;
un dispositif de commande (40) configuré pour commander ledit dispositif syntoniseur (22) et ledit dispositif de communication (13) en fonctionnement ; et
un dispositif de commutation (224) commandé par un signal de commande (CG) en fonction de l'état de communication dudit dispositif de communication,
**caractérisé en ce que**
ledit dispositif syntoniseur (22) comprend un étage d'entrée (222) commandé par ledit dispositif de commutation (224) ; **en ce que**
ledit étage d'entrée (222) comprend un premier chemin de signal sur lequel ledit signal récepteur (Stv) est amplifié avant d'être transmis en aval, et un second chemin de signal sur lequel ledit signal récepteur (Stv) n'est pas amplifié lorsqu'il est transmis en aval ; et **en ce que**
ledit dispositif de commutation (224) est adapté pour sélectionner le premier chemin de signal ou le second chemin de signal dans ledit étage d'entrée (222) en fonction de l'état de communication dudit dispositif de communication.

2. Appareil terminal mobile selon la revendication 1, dans lequel
ledit second chemin de signal sur lequel ledit signal récepteur (Stv) n'est pas amplifié lorsqu'il est transmis en aval est constitué d'un circuit de retour (232) d'un dispositif amplificateur (231) attaché au premier chemin de signal sur lequel ledit signal récepteur (Stv) est amplifié avant d'être transmis en aval.

3. Appareil terminal mobile selon la revendication 1, dans lequel
ledit état de communication comprend un premier état de communication dans lequel ledit dispositif de communication (13) transmet un signal sans fil ou dans lequel un signal sans fil reçu par ledit dispositif de communication (13) a un niveau de signal supérieur à un seuil prédéterminé ; et dans lequel
ledit dispositif de commande (40) est adapté pour sélectionner dans ledit premier état de communication ledit second chemin de signal sur lequel ledit signal récepteur (Stv) n'est pas amplifié lorsqu'il est transmis en aval.

4. Appareil terminal mobile selon la revendication 1, dans lequel
ledit état de communication comprend un second état de communication dans lequel ledit dispositif de communication (13) ne transmet pas un signal sans fil ou dans lequel un signal sans fil reçu par ledit dispositif de communication (13) a un niveau de signal ne dépassant pas un seuil prédéterminé ; et dans lequel
ledit dispositif de commande (40) est adapté pour sélectionner dans ledit second état de communication le premier chemin de signal sur lequel ledit signal récepteur (Stv) est amplifié lorsqu'il est transmis en aval.

5. Procédé de réception de signal de radiodiffusion comprenant les étapes consistant à :
convertir la fréquence dans un dispositif syntoniseur (22) lors de la sélection d'un signal sur un canal souhaité à partir d'un signal récepteur (Stv) dérivé d'un signal de radiodiffusion reçu ;
conduire des communications sans fil dans un dispositif de communication (13) ;
commander ledit dispositif syntoniseur (22) et ledit dispositif de communication (13) en fonctionnement par un dispositif de commande (40) ; et
commander un dispositif de commutation (224) par un signal de commande (CG) généré dans ledit dispositif de commande (40) en fonction d'un état de communication déterminé dudit dispositif de communication (13),
**caractérisé par** les étapes consistant à :
sélectionner dans un étage d'entrée (222) dans ledit dispositif syntoniseur (22) par ledit dispositif de commutation (224), en fonction dudit état de communication déterminé, un premier ou un second chemin de signal, moyennant quoi, sur ledit premier chemin de signal, ledit signal récepteur (Stv) est amplifié (ST3) avant d'être transmis en aval et moyennant quoi, sur ledit second chemin de signal, ledit signal récepteur (Stv) n'est pas amplifié (ST4) lorsqu'il est transmis en aval ; et
effectuer ladite conversion de fréquence à partir dudit signal récepteur (Stv) envoyé sur ledit premier ou second chemin de signal sélectionné.
